# DEMANDE DE BREVET EUROPEEN

(11) **EP 2 131 093 A1**
(43) Date de publication de la demande: **09.12.2009**
(21) Numéro de dépôt: 08447028.5
(22) Date de dépôt: 05.06.2008
(51) Int. Cl.: F16L 55/18

(54) **Appareillage destiné à reformer des conduits à accoupler**

(71) Demandeur: Sprl RMS, 4100 Seraing (BE)
(72) Inventeur: La désignation de l'inventeur n'a pas encore été déposée

(57) **Abrégé**

Appareillage 1 pour remise en forme de tubes constitué de deux mâchoires semi-cylindriques 3 et 6, de préférence métalliques et d'épaisseur suffisante que pour ne pas se déformer lors du serrage, l'une fixe 6 et soudée sur deux manchons 4a et 4b eux-mêmes soudés aux deux extrémités de l'axe 5 et d'une mâchoire mobile 3 soudée sur un manchon 7 pivotant autour dudit axe 5 et placé entre les deux manchons fixes 4a et 4b. La fermeture de l'appareillage 1 s'effectuant grâce à deux tiges filetées 9a et 9b portées par la mâchoire fixe 6, tiges filetées pouvant pivoter autour d'axes 10a et 10b, et qui entrent entre les branches des deux U 8a et 8b soudés sur la mâchoire mobile 3, ces tiges filetées 9a et 9b portant des écrous 12a et 12b de fermeture et de serrage.

## Description

Les installations urbaines de distribution de fluides (eau, gaz, électricité, téléphone, fibres optiques, etc...) sont généralement souterraines donc nécessitent de creuser dans le sol une tranchée plus ou moins profonde (suivant norme de 0,8 à 1,2 m en fonction des endroits concernés) et d'une largeur la plus faible possible de manière à éviter de trop grandes emprises (trottoirs, routes goudronnées ou autres) mais qui complique la tâche du personnel chargé de l'installation et/ou de l'entretien.

Ces installations sont constituées de tubes, généralement d'une longueur de 14 mètres, le plus souvent en polyéthylène haute densité (PEHD), et couvrent de grandes distances ce qui oblige à de nombreux raccordements entre deux tronçons consécutifs. Ces raccordements, vu les dangers constitués par tout défaut (déformation quelconque suite au transport ou à la manipulation des conduits) pouvant provoquer des fuites et par-là de grands dangers, doivent répondre à des normes de sécurité édictées par des organismes le plus souvent d'état, normes généralement très strictes exigeant que tant le matériel utilisé que le personnel installateur soient agréés et que ce personnel apporte un soin tout particulier lors du travail. Il est donc obligatoire que ce personnel vérifie la propreté et principalement la forme des extrémités à raccorder de manière à éviter tout problème de fuites.

En effet toute déformation du diamètre du tube (ovalisation) peut causer de grands dommages entre autre arrachage des résistances couvrant la surface interne du manchon électrosoudable de raccordement d'où soudure défectueuse ou encore lors du cisaillement du tube pour permettre une déviation, opération qui peut provoquer une déformation des extrémités des tubes ainsi cisaillés et par là amener des raccordements défectueux donc des fuites excessivement dangereuses surtout dans les installations de gaz.

Divers systèmes de remise en forme des tubes existent actuellement mais ils sont généralement coûteux, encombrants donc peu adaptés aux espaces de travail dans des tranchées étroites et de ce fait peu fiables et surtout non agréés par les organismes officiels chargés du contrôle du matériel utilisé, matériel qui doit impérativement être pourvu d'un numéro d'agréation officiel.

L'appareillage décrit ci après, agréé par les services de contrôle reconnus officiellement, remédie aux inconvénients rencontrés.

L'appareillage est constitué de deux mâchoires semi-cylindriques, de préférence métalliques, une fixe et l'autre mobile qui lorsqu'elles sont refermées l'une sur l'autre présentent un diamètre intérieur identique au diamètre extérieur du tube à reformer. Les deux mâchoires sont montées sur un axe qui porte à ses deux extrémités des manchons fixes soudés sur ledit axe et entre ces deux manchons fixes se trouve un manchon pouvant pivoter quant à lui autour dudit axe.

Une des mâchoires est soudée sur les deux manchons fixes et l'autre mâchoire est quant à elle soudée sur le manchon central pivotant ce qui permet ainsi d'ouvrir et de refermer l'appareillage de manière à enserrer fermement le tube à reformer.

La mâchoire soudée sur le manchon axial porte deux pièces en forme d'U et la mâchoire soudée sur les deux manchons extérieurs est quant à elle pourvue de deux systèmes de serrage constitués chacun d'une tige filetée pivotant autour d'un axe compris entre deux montants soudés sur ladite mâchoire. Ces tiges filetées passant entre les branches des pièces en U permettent, par l'intermédiaire d'écrous, de serrer les mâchoires l'une contre l'autre et d'enserrer fermement le tube à reformer de manière à lui redonner la forme rigoureusement cylindrique requise pour obtenir une parfaite étanchéité lors de la soudure des divers manchons de raccordement.

Le mâchoire pivotante porte une poignée en forme d'U soudée sur cette mâchoire ceci de manière à pouvoir porter et/ou maintenir en place l'appareillage lors du travail de remise en forme quand celle-ci s'effectue sur place dans la tranchée.

Ces mâchoires doivent aussi avoir une épaisseur suffisante que pour ne pas se déformer lors de l'utilisation de l'appareillage.

Suivant le diamètre des tubes à reformer, soit de 20 à 400 mm, le diamètre intérieur des mâchoires doit être adapté.

De même, vu l'élasticité de la matière constitutive des tubes (polyéthylène), ceux-ci doivent impérativement rester enserrés pendant un temps déterminé variant de 1 à 2 heures suivant les diamètres desdits tubes.

D'autres particularités et caractéristiques de l'invention ressortiront de la description d'un mode avantageux de réalisation repris ci-après à titre d'exemple non limitatif et faisant référence aux dessins annexés.

L'exemple repris est destiné à la remise en forme de tubes destinés à la distribution de gaz naturel d'où le danger présenté par toute fuite en cas de non-conformité de forme parfaitement cylindrique.
La figure 1 présente une vue de l'appareillage en utilisation.
La figure 2 présente une vue détaillée de l'appareillage.

Dans ces figures les mêmes repères désignent les mêmes pièces.

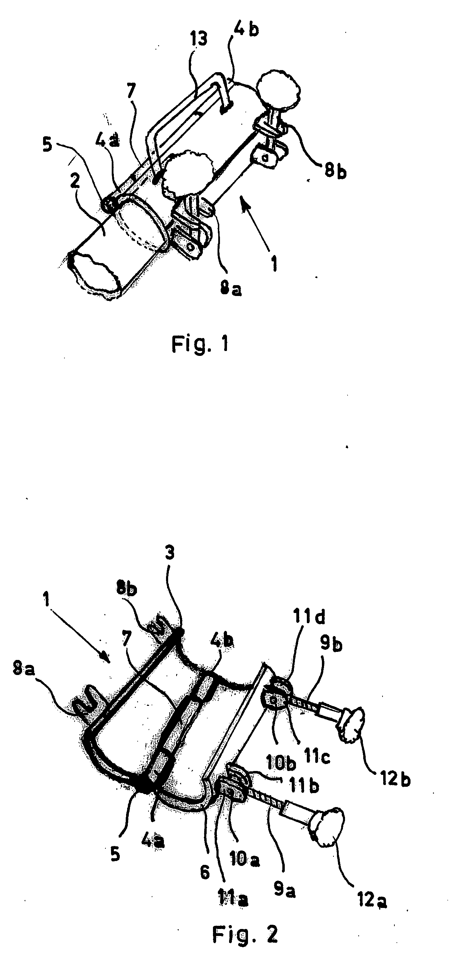

La figure 1 montre une vue de l'appareillage 1 lors de la remise en forme d'un tube 2 donc en position fermée par l'intermédiaire des vis de serrage.

La figure 2 montre une vue détaillée de l'appareillage 1.

Celui-ci est constitué d'une mâchoire fixe 6 soudée sur deux manchons 4a et 4b soudés sur un axe 5.

L'autre mâchoire 3 est soudée sur un manchon 7 pouvant pivoter autour de l'axe 5 et de ce fait permet d'ouvrir ou de refermer l'appareillage 1 et ainsi d'enserrer le tube 2 pour remise en forme parfaitement cylindrique.

Pour permettre une fermeture très ferme de l'appareillage 1 la mâchoire fixe 6 porte deux systèmes de fermeture constitués de tiges filetées 9a et 9b qui pivotent autour d'axes 10a et 10b enserrés entre deux parois 11a et 11b pour un côté et 11c et 11d pour l'autre côté. La mâchoire pivotante 3 est, quant à elle, munie de deux pièces en forme d'U 8a et 8b soudées au bord de cette mâchoire 3.

Les tiges filetées 9a et 9b viennent se placer dans l'ouverture des U 8a et 8b et par l'intermédiaire des écrous 12a et 12b permettent de fermer l'appareillage 1 et ainsi enserré fermement le tube 2.

La mâchoire mobile 3 porte également une poignée 13 en forme d'U qui est soudée sur ladite mâchoire 3 ceci afin de permettre de porter et/ou de maintenir en place l'appareillage 1 lors du travail de remise en forme du tube 2 lorsque le travail s'effectue sur place dans la tranchée.

## Revendications

1. Appareillage pour remise en forme de tubes **caractérisé en ce qu'**il est constitué de deux mâchoires semi-cylindriques, l'une fixe 6 et soudée sur deux manchons 4a et 4b eux-mêmes soudés aux deux extrémités de l'axe 5 et d'une mâchoire mobile 3 soudée sur un manchon 7 pivotant autour dudit axe 5 et placé entre les deux manchons fixes 4a et 4b La fermeture de l'appareillage s'effectuant grâce à deux tiges filetées 9a et 9b portés par la mâchoire fixe 6, tiges filetées pouvant pivoter autour d'axes 10a et 10b, et qui entrent entre les branches des deux U 8a et 8b soudés sur la mâchoire mobile 3, ces tiges filetées 9a et 9b portant des écrous 12a et 12b de fermeture et de serrage.

2. Appareillage suivant revendication 1 **caractérisé en ce que** les mâchoires 3 et 6 sont de préférence métalliques et d'épaisseur suffisante que pour ne pas se déformer lors du serrage du tube 2.

3. Appareillage suivant les revendications précédentes **caractérisé en ce que** ces mâchoires ont un diamètre intérieur égal au diamètre extérieur du tube 2 à reformer.

4. Appareillage suivant les revendications précédentes **caractérisé en ce que** le tube 2 à remettre en forme reste serré dans l'appareillage 1 pendant un temps suffisant (de 1 à 2 heures suivant le diamètre du tube 2) , vu l'élasticité de la matière (polyéthylène), que pour garder sa forme parfaitement cylindrique lors du desserrage.

5. Appareillage suivant les revendications précédentes **caractérisé en ce que** la mâchoire mobile 3 porte une poignée 13 soudée ceci de manière à pouvoir porter et/ou maintenir en place l'appareillage 1 lors du travail de remise en forme quand celle-ci s'effectue sur place dans la tranchée.

## Revendications modifiées

### Revendications modifiées conformément à la règle 137(2) CBE.

**1.** Appareillage pour remise en forme de tubes, en majorité en polyéthylène haute densité (PEHD), **caractérisé en ce qu'**il est constitué de deux mâchoires semi-cylindriques 3 et 6 présentant sur toute leur longueur un diamètre intérieur identique au diamètre extérieur du tube 2 à reformer, mâchoires de préférence métalliques et d'épaisseur suffisante de manière à ne pas se déformer lors du serrage dudit tube 2, la mâchoire 6 étant fixe et soudée sur deux manchons 4a et 4b eux-mêmes soudés aux deux extrémités de l'axe 5 et d'une mâchoire mobile 3 soudée sur un manchon 7 pivotant autour dudit axe 5 et placé entre les deux manchons fixes 4a et 4b La fermeture de l'appareillage s'effectuant grâce à deux tiges filetées 9a et 9b portés par la mâchoire fixe 6, tiges filetées pouvant pivoter autour d'axes 10a et 10b, et qui entrent entre les branches des deux U 8a et 8b soudés sur la mâchoire mobile 3, ces tiges filetées 9a et 9b portant des écrous 12a et 12b de fermeture et de serrage.

**2.** Appareillage suivant la revendication précédente **caractérisé en ce que** lors de son utilisation il doit, grâce à ses systèmes de fermeture, être tenu bien fermé pendant un temps suffisant (de 1 à 2 heures suivant le diamètre du tube 2) pour que le tube 2 à remettre en forme, vu l'élasticité de la matière concernée, garde une forme parfaitement cylindrique lors du desserrage de manière à coopérer de façon parfaite avec le manchon électrosoudable de raccordement qui sera posé pour le raccordement..

**3.** Appareillage suivant les revendications précédentes **caractérisé en ce que** la mâchoire mobile 3 porte une poignée 13 soudée ceci de manière à pouvoir porter, placer et/ou maintenir en place l'appareillage 1 lors du travail de remise en forme quand celle-ci s'effectue sur place dans la tranchée.
